# EUROPÄISCHE PATENTSCHRIFT

(11) **EP 3 759 371 B1**
(45) Veröffentlichungstag und Bekanntmachung des Hinweises auf die Patenterteilung: **07.06.2023**
(21) Anmeldenummer: 19706872.9
(22) Anmeldetag: 04.02.2019
(51) Int. Cl.: F16D 25/08, F16D 25/12

(54) **KUPPLUNGSANORDNUNG SOWIE DIESE KUPPLUNGSANORDNUNG AUFWEISENDE ANTRIEBSEINHEIT**
CLUTCH ASSEMBLY AND DRIVE UNIT HAVING THIS CLUTCH ASSEMBLY
SYSTÈME D'EMBRAYAGE ET UNITÉ D'ENTRAÎNEMENT PRÉSENTANT CE SYSTÈME D'EMBRAYAGE

(30) Priorität: 27.02.2018 DE 102018104363
(43) Veröffentlichungstag der Anmeldung: 06.01.2021
(73) Patentinhaber: Schaeffler Technologies AG & Co. KG, 91074 Herzogenaurach (DE)
(72) Erfinder: ORTMANN, Simon, 76532 Baden-Baden (DE); WAGNER, Philippe, 67460 Souffelweyersheim (FR)
(86) Internationale Anmeldenummer: PCT/DE2019/100112
(87) Internationale Veröffentlichungsnummer: WO 2019/166048

(56) Entgegenhaltungen:
- EP-A1- 3 133 308
- WO-A1-01/76041
- WO-A1-2018/024966
- DE-A1-102005 025 772
- DE-A1-102012 201 524
- DE-A1-102016 217 211

## Beschreibung

Die Erfindung betrifft eine Kupplungsanordnung (auch als Hybridmodul bezeichnet) für einen Antriebsstrang eines Kraftfahrzeuges, wie eines Pkws, Lkws, Busses oder sonstigen Nutzfahrzeuges gemäß dem Oberbegriff des Anspruchs 1. Insbesondere betrifft die Erfindung eine Kupplungsanordnung (auch als Hybridmodul bezeichnet) für einen Antriebsstrang eines Kraftfahrzeuges, wie eines Pkws, Lkws, Busses oder sonstigen Nutzfahrzeuges, mit einem Gehäuse, einem relativ zu dem Gehäuse um eine Drehachse drehbar gelagerten Träger, einer mit ihrem Rotor rotatorisch mit dem Träger gekoppelten elektrischen Maschine, mehreren Kupplungen, wobei jede Kupplung mit einem Kupplungsbestandteil (d.h. einem ihrer beiden drehfest miteinander verbindbaren Kupplungsbestandteile) an dem Träger drehfest aufgenommen ist, sowie mit einer zumindest einen Nehmerzylinder aufweisenden Betätigungsvorrichtung, wobei der zumindest eine Nehmerzylinder betätigend auf eine Kupplung / eine der Kupplungen einwirkt. Zudem betrifft die Erfindung eine Antriebseinheit für einen Antriebsstrang eines Kraftfahrzeuges, mit dieser Kupplungsanordnung.

Gattungsgemäße Kupplungsanordnungen sind aus dem Stand der Technik bereits hinlänglich bekannt. In diesem Zusammenhang offenbart bspw. die WO 2017/186 227 A1 ein Hybridmodul und eine Antriebsanordnung für ein Kraftfahrzeug.

Als weiterer Stand der Technik wird auf die WO 01/076041 A1, die WO 2018/024966 A1, die DE 10 2016 217 211 A1, die EP 3 133 308 A1, die DE 10 2005 025 772 A1 und die DE 10 2012 201 524 A1 verwiesen.

Als Nachteil bekannter Kupplungsanordnungen hat es sich jedoch herausgestellt, dass diese häufig relativ großbauend ausgebildet sowie aufwändig montierbar sind. Insbesondere die in einigen Ausführungen mittels so genannter Drehdurchführungen versorgten Nehmerzylinder sind durch relativ viele Montageschritte in der Kupplungsanordnung zu integrieren. Weiterhin ist eine Lagerung zum Lagern der Kupplungsanordnung in Abstimmung auf diese Nehmerzylinder so zu montieren, dass eine Betätigung des Nehmerzylinders gewährleistet bleibt.

Es ist die Aufgabe der vorliegenden Erfindung, die aus dem Stand der Technik bekannten Nachteile zu beheben und insbesondere eine Kupplungsanordnung zur Verfügung zu stellen, die sowohl relativ klein bauend ausgebildet ist, als auch einfach montierbar ist.

Dies wird erfindungsgemäß durch eine Kupplungsanordnung gemäß den Merkmalen des Anspruchs 1 gelöst. Insbesondere wird die Aufgabe dadurch gelöst, dass der zumindest eine Nehmerzylinder in einer axialen Richtung (entlang der Drehachse) an einem, in einem Betriebszustand den Träger relativ zu einem gehäusefesten Bereich lagernden (ersten) Stützlager abgestützt ist.

Dadurch werden die Betätigungsvorrichtung sowie das Stützlager in axialer Richtung besonders dicht zueinander angeordnet, was den notwendigen axialen Bauraum deutlich reduziert.

Weitere vorteilhafte Ausführungsformen sind mit den Unteransprüchen beansprucht und nachfolgend näher erläutert.

In diesem Zusammenhang ist es erfindungsgemäß, wenn das (als Wälzlager ausgebildete) Stützlager ein Kugellager, vorzugsweise ein Schrägkugellager oder ein Rillenkugellager, oder ein Nadellager ist. Das Stützlager sitzt zudem erfindungsgemäß axial hinter dem zumindest einen Nehmerzylinder, das heißt hinter einem ein Aktorgehäuse der Betätigungsvorrichtung bildenden Bereich. Mit der Richtung "hinter" ist hier die der Getriebeeinrichtung zugewandte Seite des Aktorgehäuses / des zumindest einen Nehmerzylinders zu verstehen.

Ist das Stützlager mit einem ersten Lagerring an einem Stützabschnitt des Trägers aufgenommen, wobei der Stützabschnitt drehfest mit einem sich axial erstreckenden sowie mit dem Rotor rotatorisch gekoppelten Aufnahmeabschnitt des Trägers verbunden ist, lässt sich eine in axialer Richtung noch kompaktere Bauweise realisieren.

Hinsichtlich des Stützabschnittes ist es für eine einfache Montage zuträglich, wenn dieser Stützabschnitt aus mehreren in Umfangsrichtung aneinander anliegenden / anschließenden Teilen besteht, wobei diese Teile des Stützabschnittes durch ein Sicherungselement, wie vorzugsweise ein Stützring oder eine Stützscheibe, miteinander verbunden sind. Auch sind als Sicherungselemente prinzipiell auch andere, einem Sicherungsring ähnliche Bauteile einsetzbar. Der Stützabschnitt bildet hierbei an den jeweiligen Teilen axial vorragende / vorstehende Lagerbereiche aus, die in radialer Richtung von außen von dem Sicherungsring fixiert / umschlossen sind. Mit einer radialen Innenseite liegt der Lagerbereich dann bevorzugt unmittelbar an dem ersten Lagerring / einer radialen Außenseite des ersten Lagerrings an. Das Sicherungselement ist weiter bevorzugt auf die den Stützabschnitt bildenden Teile (radial von außen) aufgepresst. Dadurch lässt sich auch eine in radialer Richtung besonders kompakte Bauweise erzeugen.

Auch ist es von Vorteil, wenn ein zweiter Lagerring des Stützlagers an dem gehäusefesten Bereich (etwa in Form eines mit dem Gehäuse der Kupplungsanordnung verbundenen Getriebegehäuse einer Getriebeeinrichtung) angebracht / aufgenommen ist und/oder der zumindest eine Nehmerzylinder in der axialen Richtung an diesem zweiten Lagerring abgestützt ist.

Weiterhin ist es vorteilhaft, zwei Nehmerzylinder in der Betätigungsvorrichtung vorzusehen. Ein zwischen einem ersten Kolben und einem ersten Gehäusebereich ausgebildeter erster Fluidraum / Druckraum eines ersten Nehmerzylinders ist dann vorzugsweise in radialer Richtung mit einem zwischen einem zweiten Kolben und einem zweiten Gehäusebereich ausgebildeten zweiten Fluidraum / Druckraum eines zweiten Nehmerzylinders geschachtelt / versetzt angeordnet. Hierbei ist es weiterhin bevorzugt, wenn der erste Kolben und/oder der zweite Kolben mit einem als Nadellager oder Schrägkugellager ausgebildeten (ersten oder zweiten) Betätigungslager (als Verbindungselemente) verbunden sind/ist.

Weiterhin ist es zweckmäßig, wenn der zumindest eine Nehmerzylinder mit einem zumindest einen Kolben verschiebbar aufnehmenden Aktorgehäuse direkt oder indirekt axial (vorzugsweise über ein Abstützbauteil) an dem zweiten Lagerring abgestützt ist.

Dadurch kann die Kupplungsanordnung im Aufbau weiter vereinfacht bzw. deren Stabilität erhöht werden.

Ist das Aktorgehäuse Bestandteil eines eine Fluiddistribution zu dem zumindest einen Nehmerzylinder / den Nehmerzylindern der Betätigungsvorrichtung ausbildenden Bauteils (Versorgungsbauteil), ist der Aufbau der Betätigungsvorrichtung einfach gehalten. In dem Versorgungsbauteil ist demnach bevorzugt ein Fluidzuführkanal je Nehmerzylinder vorhanden, der in einen Fluidraum des Nehmerzylinders mündet. Die Anbindung / der Anschluss des Fluidzuführkanals an den Fluidraum erfolgt axial oder radial.

Ist der zumindest eine Nehmerzylinder zusätzlich in einer radialen Richtung der Drehachse an dem zweiten Lagerring abgestützt, ist die Betätigungsvorrichtung auch relativ zu der Drehachse geschickt zentriert angeordnet.

Weiterhin ist es von Vorteil, wenn der das Stützlager aufnehmende Stützabschnitt des Trägers einen Antriebsbereich aufweist, wobei an dem Antriebsbereich ein Antriebszahnrad zum Antrieb einer Pumpe im Betrieb der Kupplungsanordnung angebracht / befestigt ist. Das Antriebszahnrad ist bevorzugt in axialer Richtung neben dem Stützlager angeordnet. Dadurch lässt sich die weitere Funktion eines Pumpenantriebs bauraumneutral einbringen.

Der Träger weist zweckmäßigerweise neben dem (ersten) Stützabschnitt bevorzugt einen weiteren zweiten Stützabschnitt auf, mittels welchem der Träger über ein weiteres (zweites) Stützlager an dem Gehäuse der Kupplungsanordnung gelagert ist. Dadurch wird die Kupplungsanordnung ausreichend fest im Betrieb abgestützt. Das zweite Stützlager ist auf einer den Reibelementen einer ersten Kupplung zugewandten axialen Seite des ersten Stützlagers (sowie des zumindest einen Nehmerzylinders) angeordnet.

Das zweite Stützlager ist vorzugsweise als ein Kugellager, besonders bevorzugt als ein Schrägkugellager, nämlich ein Vierpunktlager, ausgebildet.

Des Weiteren betrifft die Erfindung eine Antriebseinheit für einen Antriebsstrang eines Kraftfahrzeuges, mit einer erfindungsgemäßen Kupplungsanordnung nach zumindest einer der zuvor beschriebenen Ausführungen sowie einer Getriebeeinrichtung, wobei eine Getriebeeingangswelle der Getriebeeinrichtung mit einem Kupplungsbestandteil einer Kupplung der Kupplungsanordnung drehfest verbunden ist.

Zur weiteren Reduzierung des Montageaufwands ist es diesbezüglich vorteilhaft, wenn die Getriebeeinrichtung ein fest mit dem Gehäuse der Kupplungsanordnung verbundenes Getriebegehäuse aufweist, wobei das den zumindest einen Nehmerzylinder in der axialen Richtung abstützende (erste) Stützlager direkt auf diesem Getriebegehäuse aufgenommen / abgestützt / angebracht ist.

In anderen Worten ausgedrückt, ist somit erfindungsgemäß eine Kupplungsanordnung für eine Hochdruckvariante in (kupplungs-)deckelfester Ausführung mit internem Kraftfluss realisiert. Es ist somit ein Hybridmodul (Kupplungsanordnung) vorgeschlagen, bei dem die axiale Abstützung des CSC-Gehäuses (Aktorgehäuse) über ein Deckellager (erstes Stützlager) gegenüber dem Hybridmodul / gegenüber einem Träger des Hybridmoduls erfolgt, wodurch ein interner Kraftfluss realisiert wird. Das Hybridmodul wird zusätzlich zu dem getriebeseitigen Lager (erstes Stützlager) motorseitig (zweites Stützlager) abgestützt.

Die Erfindung wird nun nachfolgend anhand von Figuren näher erläutert.

Es zeigen:
- Fig. 1: eine Längsschnittdarstellung einer erfindungsgemäßen Kupplungsanordnung nach einem bevorzugten Ausführungsbeispiel, und
- Fig. 2: eine Längsschnittdarstellung eines Detailbereiches der Kupplungsanordnung seitens einer zwei Kupplungen der Kupplungsanordnung betätigenden Betätigungsvorrichtung und eines daran abgestützten (ersten) Stützlagers.

Die Figuren sind lediglich schematischer Natur und dienen ausschließlich dem Verständnis der Erfindung. Die gleichen Elemente sind mit denselben Bezugszeichen versehen.

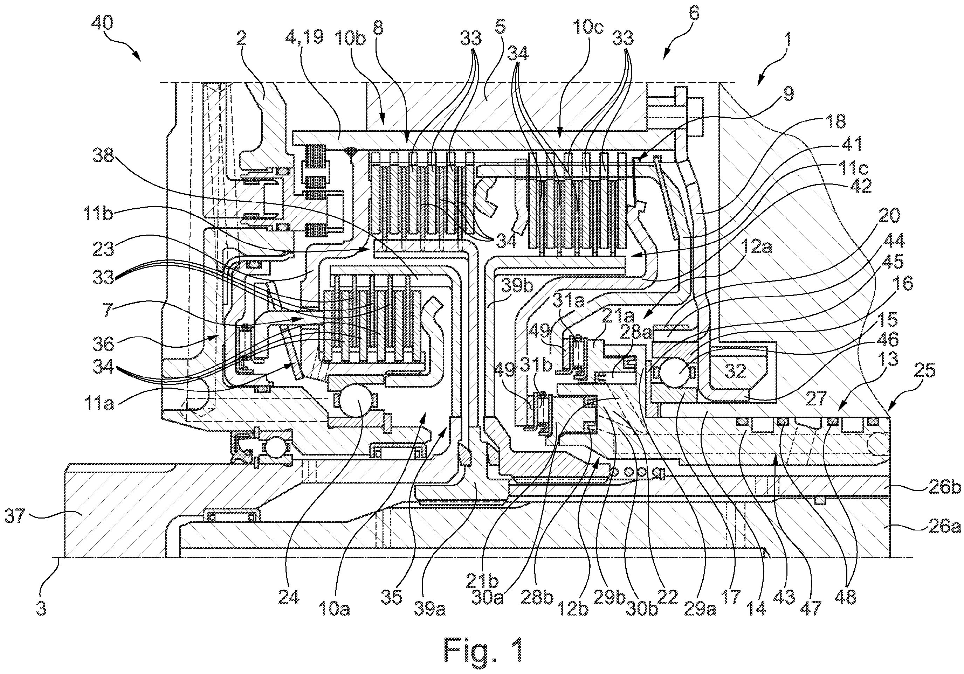

Ein bevorzugtes Ausführungsbeispiel einer erfindungsgemäßen Kupplungsanordnung 1 ist in Verbindung mit Fig. 1 gut zu erkennen. Die Kupplungsanordnung 1 ist hierbei bereits in einer Antriebseinheit 40 eingesetzt. Die Antriebseinheit 40 bildet eine Einheit aus der Kupplungsanordnung 1 sowie einer Getriebeeinrichtung 25. Seitens der Getriebeeinrichtung 25 ist der Übersichtlichkeit halber lediglich ein Getriebegehäuse 27 sowie zwei in diesem Getriebegehäuse 27 verdrehbar aufgenommene Getriebeeingangswellen 26a, 26b dargestellt. Die Antriebseinheit 40 ist im Betrieb auf typische Weise Bestandteil eines Hybridantriebsstranges eines (hybriden) Kraftfahrzeuges. Wie nachfolgend näher beschrieben, ist die Kupplungsanordnung 1 als ein Hybridmodul ausgeführt.

Die Kupplungsanordnung 1 weist insgesamt drei Kupplungen 7, 8, 9 auf. Die Kupplungsanordnung 1 ist daher auch als Dreifachkupplung bezeichnet. Eine erste Kupplung 7 ist in Form einer Trennkupplung seitens eines Eingangs der Kupplungsanordnung 1 angeordnet. Der Eingang der Kupplungsanordnung 1 ist jener Bereich, der im Betrieb mit einer der Übersichtlichkeit halber nicht dargestellten Verbrennungskraftmaschine rotatorisch gekoppelt ist. Eine zweite Kupplung 8 sowie eine dritte Kupplung 9 bilden gemeinsam eine Doppelkupplung aus, die mit den beiden Getriebeeingangswellen 26a, 26b zusammenwirkt.

Ein Eingangsteil 37 (auch als Verbindungs- / Zwischenteil bezeichnet) der Kupplungsanordnung 1 ist im Betrieb unmittelbar oder mittelbar mit einer Ausgangswelle der Verbrennungskraftmaschine drehfest verbunden. Das Eingangsteil 37 ist entweder unmittelbar an der Ausgangswelle der Verbrennungskraftmaschine drehfest angebracht oder mittelbar mittels einer Drehschwingungsdämpfeinrichtung, wie einem Zweimassenschwungrad, mit der Ausgangswelle verbunden. Das Eingangsteil 37 ist drehbar an einem Gehäuse 2 der Kupplungsanordnung 1 gelagert. Das Eingangsteil 37 ragt von einer axialen Außenseite des Gehäuses 2 (auch als Kupplungsgehäuse bezeichnet) in einen Innenraum 35 des Gehäuses 2 hinein.

In dem Innenraum 35 bildet das Eingangsteil 37 einen ersten Kupplungsbestandteil 10a der ersten Kupplung 7 mit aus. Das Eingangsteil 37 weist hierzu einen Tragbereich 38 des ersten Kupplungsbestandteils 10a auf. An dem Tragbereich 38 sind mehrere erste Reibelemente 33 der ersten Kupplung 7 drehfest sowie in axialer Richtung relativ zueinander verschieblich aufgenommen. An einem weiteren zweiten Kupplungsbestandteil 11a der ersten Kupplung 7 sind mehrere zweite Reibelemente 34 vorgesehen. Die zweiten Reibelemente 34 der ersten Kupplung 7 sind an einem Träger 4 drehfest sowie relativ zueinander axial verschieblich aufgenommen. Somit ist der zweite Kupplungsbestandteil 11a der ersten Kupplung 7 an dem Träger 4 aufgenommen. Der Träger 4 weist einen (zweiten) Stützabschnitt 23 auf, der diesen zweiten Kupplungsbestandteil 11a der ersten Kupplung 7 ausbildet / aufnimmt. Der zweite Stützabschnitt 23 ist mittels eines als Vierpunktlager ausgebildeten (zweiten) Stützlagers 24 an dem Gehäuse 2 abgestützt.

Der zweite Stützbereich 23 ist drehfest mit einem hülsenförmigen Aufnahmeabschnitt 19 des Trägers 4 drehfest weiter verbunden. Zu diesem Zweck ist der zweite Stützabschnitt 23 an den Aufnahmeabschnitt 19 angeschweißt. An einem dem zweiten Stützabschnitt 23 axial gegenüberliegenden Ende des Aufnahmeabschnittes 19 ist an dem Aufnahmeabschnitt 19 ein weiterer (erster) Stützabschnitt 18 angebracht (mittels Verschraubung). Über diesen ersten Stützabschnitt 18 ist der Träger 4 über ein weiteres (erstes) Stützlager 15, in Form eines Schrägkugellagers (Rillenkugellager, alternativ auch (Radial-)Nadellager) ausgebildet, gehäusefest abgestützt / gelagert, wie auch nachfolgend näher beschrieben.

Die Kupplungsanordnung 1 weist auch eine elektrische Maschine 6 auf. Die elektrische Maschine 6 ist koaxial zur Drehachse 3 der Kupplungsanordnung 1 angeordnet. Ein Rotor 5 der elektrischen Maschine 6 ist auf dem Aufnahmeabschnitt 19 (nämlich einer radialen Außenseite des Aufnahmeabschnittes 19) drehfest angebracht. Somit ist der Rotor 5 gemeinsam mit dem Träger 4 relativ zu einem Stator der elektrischen Maschine 6 drehbar gelagert.

Der Träger 4 ist zudem mit den beiden weiteren Kupplungen 8 und 9 verbunden. Der Träger 4 / der Aufnahmeabschnitt 19 nimmt unmittelbar einen ersten Kupplungsbestandteil 10b, 10c der zweiten Kupplung 8 sowie der dritten Kupplung 9 auf. Dies ist ebenfalls in Fig.1 übersichtlich zu erkennen.

Ein erster Kupplungsbestandteil 10b der zweiten Kupplung 8 ist unmittelbar an einer radialen Innenseite des Aufnahmeabschnittes 19 aufgenommen. Mehrere erste Reibelemente 33 der zweiten Kupplung 8 sind drehfest sowie relativ zueinander axial verschieblich an dem Träger 4 / dem Aufnahmeabschnitt 19 aufgenommen. Ein zweiter Kupplungsbestandteil 11b der zweiten Kupplung 8 ist drehfest mit einer ersten Getriebeeingangswelle 26a der Getriebeeinrichtung 25 weiter verbunden. Der zweite Kupplungsbestandteil 11b der zweiten Kupplung 8 weist mehrere (zweite) Reibelemente 34 auf, die drehfest sowie relativ zueinander axial verschieblich an einem ersten Reibelementeträger 39a angebracht sind. Der erste Reibelementeträger 39a ist direkt weiter drehfest mit der ersten Getriebeeingangswelle 26a verbunden.

Entsprechend der zweiten Kupplung 8 ist die dritte Kupplung 9 aufgebaut. Die dritte Kupplung 9 ist mit ihren Reibelementen 33, 34 in axialer Richtung gesehen neben den Reibelementen 33, 34 der zweiten Kupplung 8 angeordnet. Die zweite Kupplung 8 ist zudem mit ihren Reibelementen 33, 34 radial außerhalb der Reibelemente 33, 34 der ersten Kupplung 7 angeordnet. Auch sind die Reibelemente 33, 34 der dritten Kupplung 9 radial außerhalb der Reibelemente 33, 34 der ersten Kupplung 7 angeordnet. Ein erster Kupplungsbestandteil 10c der dritten Kupplung 9 ist direkt an dem Träger 4 / an dem Aufnahmeabschnitt 19 aufgenommen. Der erste Kupplungsbestandteil 10c ist, wie bereits der erste Kupplungsbestandteil 10b der zweiten Kupplung 8, unmittelbar an der radialen Innenseite des Aufnahmeabschnittes 19 vorgesehen. Mehrere erste Reibelemente 33 der dritten Kupplung 9, die Bestandteil des ersten Kupplungsbestandteils 10c sind, sind drehfest sowie axial relativ zueinander verschieblich an dem Aufnahmeabschnitt 19 aufgenommen. Ein zweiter Kupplungsbestandteil 11c der dritten Kupplung 9 weist mehrere zweite Reibelemente 34 auf, die drehfest sowie axial relativ zueinander verschieblich an einem zweiten Reibelementeträger 39b der dritten Kupplung 9 aufgenommen sind. Der zweite Reibelementeträger 39b ist mit der zweiten Getriebeeingangswelle 26b weiter verbunden.

Die Reibelemente 33, 34 der jeweiligen Kupplungen 7, 8, 9 wechseln sich jeweils in axialer Richtung je Kupplung 7, 8, 9 ab. In einer geschlossenen Stellung der jeweiligen Kupplung 7, 8, 9 sind deren Reibelemente 33, 34 in axialer Richtung reibkraftschlüssig aneinander angedrückt, sodass es zu einem drehfesten Verbund des jeweiligen ersten Kupplungsbestandteils 10a, 10b, 10c mit dem zweiten Kupplungsbestandteil 11a, 11b, 11c kommt. In einer geöffneten Stellung der jeweiligen Kupplung 7, 8, 9 sind deren Reibelemente 33, 34 dann so relativ zueinander beabstandet angeordnet, dass deren erster Kupplungsbestandteil 10a, 10b, 10c von dem zweiten Kupplungsbestandteil 11a, 11b, 11c rotatorisch entkoppelt ist.

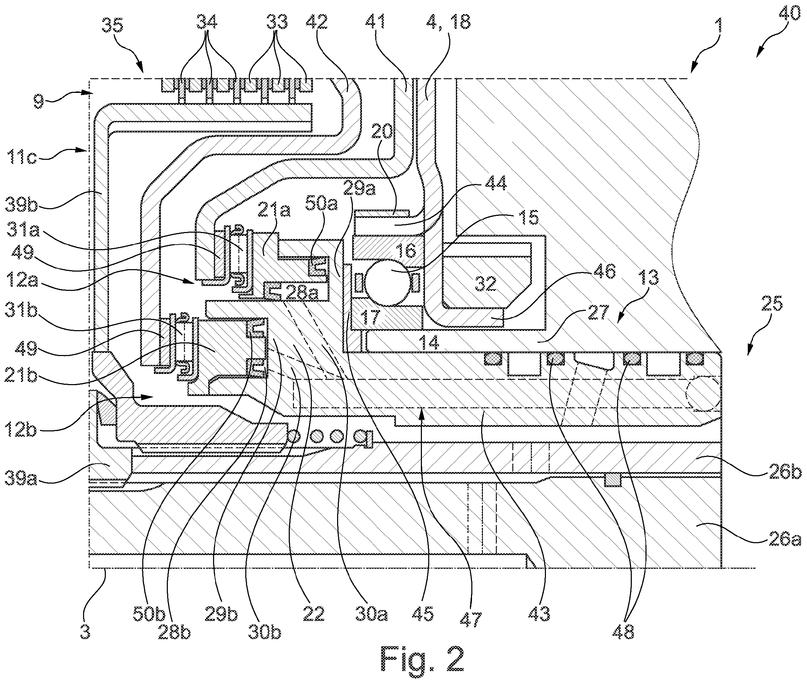

Zur Betätigung der zweiten Kupplung 8 sowie der dritten Kupplung 9, d.h. zum Verbringen der jeweiligen Kupplung 8, 9 zwischen ihrer geöffneten und ihrer geschlossenen Stellung, ist eine Betätigungsvorrichtung 13 vorgesehen, die auch in Fig. 2 detailliert erkennbar ist. Die Betätigungsvorrichtung 13 ist als ein Doppelnehmerzylinder ausgeführt. Die Betätigungsvorrichtung 13 weist ein Aktorgehäuse 22 auf. In diesem Aktorgehäuse 22 sind gemeinsam ein erster Nehmerzylinder 12a sowie ein zweiter Nehmerzylinder 12b integriert. Jeder Nehmerzylinder 12a, 12b ist als ein konzentrischer Nehmerzylinder 12a, 12b (CSC) ausgebildet. Der erste Nehmerzylinder 12a wirkt im Betrieb mittels eines ersten Drucktopfes 41 verstellend auf die Reibelemente 33, 34 der zweiten Kupplung 8 ein, wohingegen der zweite Nehmerzylinder 12b mittels eines zweiten Drucktopfes 42 verstellend auf die Reibelemente 33, 34 der dritten Kupplung 9 einwirkt.

Das Aktorgehäuse 22 ist mit einem Versorgungsbauteil 47 gemeinsam, d.h. integral / stoffeinteilig, ausgebildet. Das Versorgungsbauteil 47 weist einen axial an das Aktorgehäuse 22 (auch als Aktorgehäuseabschnitt bezeichnet) anschließenden Grundabschnitt 43 auf. Der Grundabschnitt 43 ist radial von innen an dem Getriebegehäuse 27 abgestützt. In dieser Ausführung ist der Grundabschnitt 43 in dem Getriebegehäuse 27 / einem Durchgangsloch des Getriebegehäuses 27 eingepresst. In dem Versorgungsbauteil 47 ist je Nehmerzylinder 12a, 12b ein Fluidzuführkanal 30a, 30b umgesetzt. Der jeweilige Fluidzuführkanal 30a, 30b mündet in einen zwischen einem Kolben 21a, 21b des jeweiligen Nehmerzylinders 12a, 12b und einem Gehäusebereich 29a, 29b des Aktorgehäuses 22 ausgebildeten Fluidraum 28a, 28b ein. Ein erster Fluidzuführkanal 30a des ersten Nehmerzylinders 12a mündet radial von innen in den ersten Fluidraum 28a ein; ein zweiter Fluidzuführkanal 30b des zweiten Nehmerzylinders 12b mündet axial in den zweiten Fluidraum 28b ein. In Abhängigkeit des Druckes in dem Fluidzuführkanal 30a, 30b ist somit der jeweilige Nehmerzylinder 12a, 12b betätigbar. Die Fluidzuführkanäle 30a, 30b sind in einem Verbindungsbereich des Versorgungsbauteils 47 mit dem Getriebegehäuse 27 über Dichtungen 48 (O-Ringe) abgedichtet. Die Kolben 21a, 21b (Ringkolben) sind auf übliche Weise mittels Betätigungslagern 31a, 31b an dem jeweiligen Drucktopf 41, 42 abgestützt. In diese Ausführung sind die Kolben 21a, 21b / Fluidräume 28a, 28b in radialer Richtung geschachtelt angeordnet, können jedoch gemäß weiteren Ausführungen auch axial geschachtelt, d.h. axial nebeneinander angeordnet sein. Die Betätigungslager 31a, 31b sind jeweils als axiale Nadellager ausgebildet, können jedoch auch als Schrägkugellager gemeinsam oder einzeln ausgebildet sein.

Erfindungsgemäß ist an dem ersten Stützabschnitt 18 ein erstes Stützlager 15 aufgenommen. Dieses erste Stützlager 15 stützt das Aktorgehäuse 22 / das Versorgungsbauteil 47 in axialer Richtung ab. Zudem dient das erste Stützlager 15 zur radialen Abstützung / Zentrierung des Aktorgehäuses 22 / Versorgungsbauteils 47. Das Aktorgehäuse 22 ist indirekt mittels eines Abstützbauteils 45 axial an dem ersten Stützlager 15 abgestützt. Insbesondere ist das Aktorgehäuse 22 in axialer Richtung an einem (zweiten) Lagerring 17 des ersten Stützlagers 15 abgestützt. Alternativ zu der indirekten Abstützung des Aktorgehäuses 22 / der Nehmerzylinder 12a, 12b über das Abstützbauteil 45 ist / sind in weiteren Ausführungen das Aktorgehäuse 22 / die Nehmerzylinder 12a, 12b unmittelbar an dem ersten Stützlager 15 abgestützt.

In weiteren Ausführungen sind die beiden Nehmerzylinder 12a, 12b auch in getrennten, miteinander axial und radial befestigten Bereichen des Aktorgehäuses 22 befestigt. Auch ist es dann möglich, dass sich lediglich der Bereich des Aktorgehäuses 22 eines Nehmerzylinders 12a, 12b axial an dem ersten Stützlager 15 abstützt.

Das erste Stützlager 15 ist mit seinem ersten Lagerring 16 an einem axial vorspringenden Lagerbereich 44 des ersten Stützabschnittes 18 aufgenommen / befestigt. Der erste Stützabschnitt 18 besteht bevorzugt aus mehreren in Umfangsrichtung aneinander anschließenden (einzeln gefertigten) Teilen, wobei diese Teile durch einen Sicherungsring 20 miteinander verbunden sind (d.h. in Umfangsrichtung, in radialer Richtung und/oder in axialer Richtung relativ zueinander fixiert sind).

Ein gegenüber diesem ersten Lagerring 16 wälzgelagerter zweiter Lagerring 17 ist drehfest auf einem gehäusefesten Bereich 14 angebracht. Dieser gehäusefeste Bereich 14 ist Teil des Getriebegehäuses 27. In weiteren Ausführungen kann dieser gehäusefeste Bereich 14 jedoch prinzipiell auch unmittelbarer Bestandteil des Gehäuses 2 der Kupplungsanordnung 1 sein. Der zweite Lagerring 17 ist mit seiner radialen Innenseite sowohl an dem Getriebegehäuse 27 als auch an dem Versorgungsbauteil 47 / Aktorgehäuse 22 abgestützt.

Neben dem Lagerbereich 44 weist der auch als Kupplungsdeckel bezeichnete erste Stützabschnitt 18 einen Antriebsbereich 46 auf. Dieser Antriebsbereich 46 ist durch einen oder mehrere sich axial entgegengesetzt zu dem Lagerbereich 44 erstreckenden axialen Vorsprung gebildet. Der Antriebsbereich 46 nimmt ein Antriebszahnrad 32 drehfest auf. Das Antriebszahnrad 32 dient im Betrieb zum Antreiben einer Pumpe, wie einer Ölpumpe.

Zurückkommend auf Fig. 1 ist dann auf typische Weise erkennbar, dass die erste Kupplung 7 mit einer separaten Betätigungseinheit 36 betätigt ist, die hierbei ebenfalls einen Nehmerzylinder aufweist.

In anderen Worten ausgedrückt, ist erfindungsgemäß ein Ausrückerverbund (Betätigungsvorrichtung 13) vorgesehen, der über Nadellager (Betätigungslager 31a, 31b) oder ähnliche kurzbauende Lager, die Drucktöpfe 41, 42 der Teilkupplungen (zweite Kupplung 8 und dritte Kupplung 9) betätigt. Hierbei ist das Gehäuse (Aktorgehäuse 22) des Ausrückers 13 komplett in der Kupplung 1 verbaut und wird bevorzugt über eine Verschraubung am Ende des Deckels (erstes Stützabschnitt 18) mit der Kupplung 1, bzw. mit dem Rotor 5, verbunden. Die Lagerung des Rotors 5 / der Kupplung 1 ist also einerseits hybridmodulseitig, andererseits getriebeseitig über das Lager 15. Angeschlossen ist ein Zahnrad 32, welches den Antrieb der Pumpe für das Öl übernimmt.

Für eine Dreifach-Kupplung 1 bestehend aus einem Rotor 6 mit hybridmodulseitiger Lagerung (zweites Stützlager 24), sowie aus den Kupplungspaketen K0 (erste und zweite Reibelemente 33, 34 der ersten Kupplung 7), K1 (erste und zweite Reibelemente 33, 34 der zweiten Kupplung 8) sowie K2 (erste und zweite Reibelemente 33, 34 der dritten Kupplung 9) wird eine getriebeseitige Lagerung über ein Deckellager (erstes Stützlager 15) vorgeschlagen. Dieses Deckellager 15 ist zentriert über den Kupplungsdeckel 18 mit dem Rotor 5. Das Ausrückerbauteil (Versorgungsbauteil 47) besteht aus einer Betätigung K1 (erster Nehmerzylinder 12a) sowie einer Betätigung K2 (zweiter Nehmerzylinder 12b). Gehalten und versorgt werden die Betätigungen 12a, 12b durch ein Gehäusebauteil (Versorgungsbauteil 47 / Aktorgehäuse 22). Dieses übernimmt auch die Versorgung mit Hydraulikflüssigkeit direkt von dem Getriebebauteil. Das Versorgungsbauteil 47 übernimmt die folgenden Funktionen: Übernahme der Druckfluide sowie des Kühlöls für die Kupplung 1 von der Getriebeglocke (Getriebegehäuse 27). Hierfür sind im hinteren Bereich Übergabegeometrien vorgesehen, sowie Abdichtungen 48 zwischen denselben. Diese können standardmäßig als O-Ringe ausgelegt werden. Die Fluidkanäle 11a, 11b sind im Bauteil angedeutet. Des Weiteren sind hier die Führungsdurchmesser und die Druckräume 28a, 28b verortet. Das Versorgungsbauteil 47 stützt sich über ein Bauteil 45 direkt am Deckellager 15 ab. Hierdurch wird der interne Kraftfluss realisiert. In einer weiteren Variante ist denkbar, auf das Bauteil 45 zu verzichten und sich direkt mit dem Gehäusebauteil 47 / Aktorgehäuse 22 auf dem Lager 15 abzustützen. Das Lager 15 findet bei der Montage einen Lagersitz in der Kupplung über welchen dann der komplette Rotor 5 / Modul 1 gelagert wird, zusammen mit der hybridmodulseitigen Lagerung 24. Hierfür wird im Kupplungsdeckel 18 ein Sitz realisiert zur Aufnahme des Bauteils 15. Da dieser segmentiert ist, wird er idealerweise von einem weiteren Bauteil (Sicherungsring 20) unterstützt. Die restlichen Segmente des Kupplungsdeckels 18 werden genutzt, um ein Zahnrad 32aufzunehmen. Dieses Zahnrad 32 dient zum Antrieb der Ölpumpe. Beim Drehen der Kupplung 1 wird auch direkt die Pumpe betrieben und das System mit Öl versorgt. Die Teilsysteme K1 und K2 bestehen jeweils aus einem Kolben (21a / 21b) einem Lager 31a, 31b, wie hier einem Nadellager (Kugellager ebenfalls denkbar), sowie einer Shimscheibe (49) und zweier Dichtungen (50a / 50b), jeweils in Form eines Dichtringes.

### Bezugszeichenliste

- 1: Kupplungsanordnung
- 2: Gehäuse
- 3: Drehachse
- 4: Träger
- 5: Rotor
- 6: elektrische Maschine
- 7: erste Kupplung
- 8: zweite Kupplung
- 9: dritte Kupplung
- 10a: erster Kupplungsbestandteil der ersten Kupplung
- 10b: erster Kupplungsbestandteil der zweiten Kupplung
- 10c: erster Kupplungsbestandteil der dritten Kupplung
- 11a: zweiter Kupplungsbestandteil der ersten Kupplung
- 11b: zweiter Kupplungsbestandteil der zweiten Kupplung
- 11c: zweiter Kupplungsbestandteil der dritten Kupplung
- 12a: erster Nehmerzylinder
- 12b: zweiter Nehmerzylinder
- 13: Betätigungsvorrichtung
- 14: gehäusefester Bereich
- 15: erstes Stützlager
- 16: erster Lagerring
- 17: zweiter Lagerring
- 18: erster Stützabschnitt
- 19: Aufnahmeabschnitt
- 20: Sicherungsring
- 21a: erster Kolben
- 21b: zweiter Kolben
- 22: Aktorgehäuse
- 23: zweiter Stützabschnitt
- 24: zweites Stützlager
- 25: Getriebeeinrichtung
- 26a: erste Getriebeeingangswelle
- 26b: zweite Getriebeeingangswelle
- 27: Getriebegehäuse
- 28a: erster Fluidraum
- 28b: zweiter Fluidraum
- 29a: erster Gehäusebereich
- 29b: zweiter Gehäusebereich
- 30a: erster Fluidzuführkanal
- 30b: zweiter Fluidzuführkanal
- 31a: erstes Betätigungslager
- 31b: zweiter Betätigungslager
- 32: Antriebszahnrad
- 33: erstes Reibelement
- 34: zweites Reibelement
- 35: Innenraum
- 36: Betätigungseinheit
- 37: Eingangsteil
- 38: Tragbereich
- 39a: erster Reibelementeträger
- 39b: zweiter Reibelementeträger
- 40: Antriebseinheit
- 41: erster Drucktopf
- 42: zweiter Drucktopf
- 43: Grundabschnitt
- 44: Lagerbereich
- 45: Abstützbauteil
- 46: Antriebsbereich
- 47: Versorgungsbauteil
- 48: Dichtung
- 49: Shim-Scheibe
- 50a: erster Dichtring
- 50b: zweiter Dichtring

## Patentansprüche

1. Kupplungsanordnung (1) für einen Antriebsstrang eines Kraftfahrzeuges, mit einem Gehäuse (2), einem relativ zu dem Gehäuse (2) um eine Drehachse (3) drehbar gelagerten Träger (4), einer mit ihrem Rotor (5) rotatorisch mit dem Träger (4) gekoppelten elektrischen Maschine (6), mehreren Kupplungen (7, 8, 9), wobei jede Kupplung (7, 8, 9) mit einem Kupplungsbestandteil (10b, 10c, 11a) an dem Träger (4) drehfest aufgenommen ist, sowie einer zumindest einen Nehmerzylinder (12a, 12b) aufweisenden Betätigungsvorrichtung (13), wobei der zumindest eine Nehmerzylinder (12a, 12b) betätigend auf eine Kupplung (7, 8, 9) einwirkt, **wobei** der zumindest eine Nehmerzylinder (12a, 12b) in einer axialen Richtung an einem, in einem Betriebszustand den Träger (4) relativ zu einem gehäusefesten Bereich (14) lagernden Stützlager (15) abgestützt ist, **dadurch gekennzeichnet, dass** das Stützlager (15) axial hinter dem zumindest einen Nehmerzylinder (12a, 12b) sitzt und entweder durch ein Kugel- oder ein Nadellager gebildet ist.

2. Kupplungsanordnung (1) nach Anspruch 1, **dadurch gekennzeichnet, dass** das Stützlager (15) mit einem ersten Lagerring (16) an einem Stützabschnitt (18) des Trägers (4) aufgenommen ist, wobei der Stützabschnitt (18) drehfest mit einem sich axial erstreckenden sowie mit dem Rotor (5) rotatorisch gekoppelten Aufnahmeabschnitt (19) des Trägers (4) verbunden ist.

3. Kupplungsanordnung (1) nach Anspruch 2, **dadurch gekennzeichnet, dass** der Stützabschnitt (18) aus mehreren in Umfangsrichtung aneinander anschließenden Teilen besteht, wobei diese Teile durch ein Sicherungselement (20), wie ein Stützring oder eine Stützscheibe, miteinander verbunden sind.

4. Kupplungsanordnung (1) nach einem der Ansprüche 1 bis 3, **dadurch gekennzeichnet, dass** der zumindest eine Nehmerzylinder (12a, 12b) in der axialen Richtung an einem zweiten Lagerring (17) des Stützlagers (15) abgestützt ist.

5. Kupplungsanordnung (1) nach Anspruch 4, **dadurch gekennzeichnet, dass** der zumindest eine Nehmerzylinder (12a, 12b) mit einem zumindest einen Kolben (21a, 21b) verschiebbar aufnehmenden Aktorgehäuse (22) direkt oder indirekt axial an dem zweiten Lagerring (17) abgestützt ist.

6. Kupplungsanordnung (1) nach Anspruch 4 oder 5, **dadurch gekennzeichnet, dass** der zumindest eine Nehmerzylinder (12a, 12b) in einer radialen Richtung der Drehachse (3) an dem zweiten Lagerring (17) abgestützt ist.

7. Kupplungsanordnung (1) nach einem der Ansprüche 1 bis 6, **dadurch gekennzeichnet, dass** der Träger (4) mit einem Stützabschnitt (23) mittels eines weiteren Stützlagers (24) an dem Gehäuse (2) gelagert ist.

8. Antriebseinheit (40) für einen Antriebsstrang eines Kraftfahrzeuges, mit einer Kupplungsanordnung (1) nach zumindest einem der Ansprüche 1 bis 7 sowie einer Getriebeeinrichtung (25), wobei eine Getriebeeingangswelle (26a; 26b) der Getriebeeinrichtung (25) mit einem Kupplungsbestandteil (11b, 11c) einer Kupplung (8, 9) der Kupplungsanordnung (1) drehfest verbunden ist.

9. Antriebseinheit (40) nach Anspruch 8, **dadurch gekennzeichnet, dass** die Getriebeeinrichtung (25) ein fest mit dem Gehäuse (2) der Kupplungsanordnung (1) verbundenes Getriebegehäuse (27) aufweist, wobei das den zumindest einen Nehmerzylinder (12a, 12b) in der axialen Richtung abstützende Stützlager (15) direkt auf diesem Getriebegehäuse (27) aufgenommen ist.

## Claims

1. A clutch assembly (1) for a drive train of a motor vehicle, having a housing (2), a support (4) mounted such that it can rotate relative to the housing (2) about a rotational axis (3), an electric machine (6) rotationally coupled via its rotor (5) to the support (4), a plurality of clutches (7, 8, 9), wherein a clutch component (10b, 10c, 11a) of each clutch (7, 8, 9) is accommodated on the support (4) in a non-rotatable manner, and an actuation device (13) having at least one slave cylinder (12a, 12b), wherein the at least one slave cylinder (12a, 12b) actuatingly acts on a clutch (7, 8, 9), **wherein** the at least one slave cylinder (12a, 12b) is supported in an axial direction on a support bearing (15) which, in an operating state, fixes the support (4) relative to a region (14) secured to the housing, **characterised in that** the support bearing (15) is seated axially behind the at least one slave cylinder (12a, 12b) and is formed either by a ball bearing or a needle bearing.

2. The clutch assembly (1) according to claim 1, **characterised in that** the support bearing (15) with a first bearing ring (16) is accommodated on a support portion (18) of the support (4), wherein the support portion (18) is connected in a non-rotatable manner to an axially extending receiving portion (19) of the support (4) which is rotationally coupled to the rotor (5).

3. The clutch assembly (1) according to claim 2, **characterised in that** the support portion (18) consists of a plurality of parts adjoining one another in the circumferential direction, wherein these parts are connected to one another by a securing element (20), such as a support ring or a support disc.

4. The clutch assembly (1) according to any one of claims 1 to 3, **characterised in that** the at least one slave cylinder (12a, 12b) is supported in the axial direction on a second bearing ring (17) of the support bearing (15).

5. The clutch assembly (1) according to claim 4, **characterised in that** the at least one slave cylinder (12a, 12b) is axially supported directly or indirectly on the second bearing ring (17) by means of an actuator housing (22) which displaceably accommodates at least one piston (21a, 21b).

6. The clutch assembly (1) according to claim 4 or 5, **characterised in that** the at least one slave cylinder (12a, 12b) is supported in a radial direction of the axis of rotation (3) on the bearing ring (17).

7. The clutch assembly (1) according to any one of claims 1 to 6, **characterised in that** the support (4) is mounted with a support portion (23) on the housing (2) by means of a further support bearing (24).

8. A drive unit (40) for a drive train of a motor vehicle, having a clutch assembly (1) according to at least one of claims 1 to 7 and a transmission device (25), wherein a transmission input shaft (26a; 26b) of the transmission device (25) is connected to a clutch component (11b, 11c) of a clutch (8, 9) of the clutch assembly (1) in a non-rotatable manner.

9. The drive unit (40) according to claim 8, **characterised in that** the transmission device (25) has a transmission housing (27), which is fixedly connected to the housing (2) of the clutch assembly (1), wherein the support bearing (15) supporting the at least one slave cylinder (12a, 12b) in the axial direction is accommodated directly on said transmission housing (27).

## Revendications

1. Système d'embrayage (1) pour une chaîne cinématique d'un véhicule automobile, comprenant un boîtier (2), un support (4) logé de manière rotative autour d'un axe de rotation (3) par rapport au boîtier (2), une machine électrique (6) couplée en rotation au support (4) par son rotor (5), plusieurs embrayages (7, 8, 9), chaque embrayage (7, 8, 9) étant reçu de manière solidaire en rotation sur le support (4) par un composant d'embrayage (10b, 10c, 11a), ainsi qu'un dispositif d'actionnement (13) présentant au moins un cylindre récepteur (12a, 12b), l'au moins un cylindre récepteur (12a, 12b) agissant sur un embrayage (7, 8, 9) lorsqu'il est actionné, l'au moins un cylindre récepteur (12a, 12b) s'appuyant dans une direction axiale sur un palier d'appui (15) qui, dans un état de fonctionnement, supporte le support (4) par rapport à une zone (14) solidaire du boîtier, **caractérisé en ce que** le palier d'appui (15) est situé axialement derrière l'au moins un cylindre récepteur (12a, 12b) et est formé soit par un roulement à billes soit par un roulement à aiguilles.

2. Système d'embrayage (1) selon la revendication 1, **caractérisé en ce que** le palier d'appui (15) est reçu par une première bague de palier (16) sur une section d'appui (18) du support (4), la section d'appui (18) étant reliée de manière solidaire en rotation à une section de réception (19) du support (4) qui s'étend axialement et qui est couplée en rotation au rotor (5).

3. Système d'embrayage (1) selon la revendication 2, **caractérisé en ce que** la section d'appui (18) est constituée de plusieurs parties se raccordant les unes aux autres dans la direction circonférentielle, ces parties étant reliées entre elles par un élément de blocage (20), tel qu'une bague d'appui ou une rondelle d'appui.

4. Système d'embrayage (1) selon l'une des revendications 1 à 3, **caractérisé en ce que** ledit au moins un cylindre récepteur (12a, 12b) est supporté dans la direction axiale par une deuxième bague de palier (17) du palier d'appui (15).

5. Système d'embrayage (1) selon la revendication 4, **caractérisé en ce que** l'au moins un cylindre récepteur (12a, 12b) est supporté axialement, directement ou indirectement, sur la deuxième bague de palier (17) par un boîtier d'actionneur (22) recevant de manière coulissante au moins un piston (21a, 21b).

6. Système d'embrayage (1) selon la revendication 4 ou 5, **caractérisé en ce que** l'au moins un cylindre récepteur (12a, 12b) est supporté par la deuxième bague de palier (17) dans une direction radiale de l'axe de rotation (3).

7. Système d'embrayage (1) selon l'une des revendications 1 à 6, **caractérisé en ce que** le support (4) est monté sur le boîtier (2) par une section d'appui (23) au moyen d'un autre palier d'appui (24).

8. Unité d'entraînement (40) pour une chaîne cinématique d'un véhicule automobile, comportant un système d'embrayage (1) selon au moins l'une des revendications 1 à 7 et un dispositif de transmission (25), dans laquelle au moins un arbre d'entrée de transmission (26a, 26b) du dispositif de transmission (25) est relié solidaire en rotation à un élément constitutif d'embrayage (11b, 11c) d'un embrayage (8, 9) du système d'embrayage (1).

9. Unité d'entraînement (40) selon la revendication 8, **caractérisée en ce que** le dispositif de transmission (25) comprend un carter de transmission (27) solidaire du boîtier (2) du système d'embrayage (1), le palier d'appui (15) supportant l'au moins un cylindre récepteur (12a, 12b) dans la direction axiale étant reçu directement sur ce carter de transmission (27).
